# DEMANDE DE BREVET EUROPEEN

(11) **EP 2 581 973 A1**
(43) Date de publication de la demande: **17.04.2013**
(21) Numéro de dépôt: 12180362.1
(22) Date de dépôt: 14.08.2012
(51) Int. Cl.: H01M 8/04, H01M 8/24

(54) **Dispositif de production d'électricité à pile à combustible et son procédé de démarrage**

(30) Priorité: 14.10.2011 FR 1159290
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: Marteau, Julien, 38000 Grenoble (FR); Cerceau, Arnaud, 38850 Charavines (FR); Roussin-Bouchard, Xavier, 38112 Meaudre (FR)
(74) Mandataire: De Cuenca, Emmanuel Jaime

(57) **Abrégé**

Procédé et dispositif de production d'électricité comprenant une enceinte (2) abritant en son sein une pile (3) à combustible, notamment du type à membrane échangeuse de protons, l'enceinte (2) définissant un volume clos autour de la pile (3) et étant munie d'ouvertures (4, 5) sélectivement obturables par des volets (14, 15) mobiles pour réguler la circulation d'air entre l'intérieur de l'enceinte (2) et l'extérieur, la pile (3) étant disposée dans l'enceinte (2) sur un plancher (7) de support, caractérisé en ce que le dispositif comporte au moins organe (6) de réchauffage sélectif, distinct de la pile (3), disposé dans l'enceinte (2) en dessous du plancher (7) et en ce que le volume situé sous le plancher (7) abritant le au moins un organe (6) de réchauffage communique avec le volume de l'enceinte (2) situé au dessus du plancher (7) via au moins un passage (8).

## Description

La présente invention concerne dispositif de production d'électricité à pile à combustible et son procédé de démarrage.

L'invention concerne plus particulièrement un dispositif de production d'électricité comprenant une enceinte abritant en son sein une pile à combustible, notamment du type à membrane échangeuse de protons, l'enceinte définissant un volume clos autour de la pile et étant munie d'ouvertures sélectivement obturables par des volets mobiles pour réguler la circulation d'air entre l'intérieur de l'enceinte et l'extérieur, la pile étant disposée dans l'enceinte sur un plancher de support.

Afin de fonctionner correctement, une pile à combustible a besoin d'évacuer de façon contrôlée les calories qu'elle produit. Des systèmes connus utilisent un système de refroidissement de la pile par air. La pile doit donc être configurée pour accueillir une circulation de l'air permettant d'accueillir de l'air frais et d'évacuer l'air chaud.

Pendant les phases de démarrage de la pile après un stockage à des températures ambiantes négatives, il est parfois nécessaire de réchauffer la pile pour la dégeler.

Divers documents décrivent des systèmes de gestion de l'air ambiant autour de la pile. Le document WO08038032 décrit une pile à cathode ouverte disposée dans une enceinte et dont le gaz de sortie de la cathode peut être recirculé dans l'enceinte en fermant sélectivement une sortie d'air de l'enceinte.

Le document WO0171842. décrit une pile à combustible disposée dans un carter alimenté en air sous pression via un compresseur. Des systèmes de vannes permettent de recirculer l'air dans le carter et le cas échéant d'en extraire de la chaleur via un échangeur.

Ces systèmes connus permettent le cas échant une gestion satisfaisante de la température de l'ambiance autour de la pile lorsqu'elle fonctionne cependant, ces système sont peu ou pas adaptés pour assurer un démarrage d'une pile à combustible dans une ambiance très froide. De plus, dans ces systèmes connus, la gestion du refroidissement ou du réchauffage de l'ambiance autour de la pile lors de son fonctionnement n'est pas totalement satisfaisante. En effet, l'efficacité du réchauffage est obtenue au détriment de l'efficacité du refroidissement et inversement.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement **caractérisé en ce que** le dispositif comporte au moins organe de réchauffage sélectif, distinct de la pile, disposé dans l'enceinte en dessous du plancher et en ce que le volume situé sous le plancher abritant le au moins un organe de réchauffage communique avec le volume de l'enceinte situé au dessus du plancher via au moins un passage.

Par ailleurs, des modes de réalisation de l'invention peuvent comporter l'une ou plusieurs des caractéristiques suivantes :
- le dispositif comporte un ventilateur inférieur disposé sous le plancher, le ventilateur inférieur étant associé à l'organe de réchauffage situé sous le plancher pour générer sélectivement un courant de circulation d'air entre le volume situé sous le plancher et le volume situé au-dessus du plancher,
- la pile comporte un système de refroidissement intégré muni d'au moins un ventilateur de refroidissement, le au moins un ventilateur de refroidissement de la pile déplaçant l'air au dessus de du plancher selon une première direction,
- le ventilateur inférieur disposé sous le plancher est orienté pour déplacer l'air selon une seconde direction, opposée à la première direction, de sorte à créer un flux de circulation en boucle dans l'enceinte dans laquelle le ventilateur inférieur aspire de l'air provenant du refoulement du au moins un ventilateur de refroidissement de la pile,
- l'enceinte comporte des ouvertures sélectivement obturables par des volets mobiles, les ouvertures étant situées sur deux parois opposées de l'enceinte, au-dessus du plancher,
- l'enceinte comporte des ouvertures sélectivement obturables par des volets mobiles, les ouvertures étant situées sur deux parois adjacentes de l'enceinte, au-dessus du plancher,
- les deux faces opposées de l'enceinte munies des ouvertures obturables sont perpendiculaires à la première direction,
- l'enceinte comporte au moins un ventilateur supérieur disposé au-dessus du plancher de façon adjacente à la au moins une ouverture sélectivement obturable par les volets,
- la direction d'écoulement d'air généré par le au moins un ventilateur de refroidissement de la pile est identique à la direction d'écoulement d'air généré par le au moins un ventilateur supérieur,
- les ouvertures sélectivement obturables sont munies de filtres à particules, pour empêcher ou limiter l'intrusion de poussière dans l'enceinte,
- le plancher est un bon conducteur de la chaleur et notamment constitué de métal,
- les dimensions du plancher sont inférieures aux dimensions transverses de l'enceinte de sorte que le au moins un passage assurant la communication entre le volume situé sous le plancher et le volume de l'enceinte situé au dessus du plancher comprend des espaces entre le plancher et au moins une des parois de l'enceinte,
- le plancher est monté coulissant dans l'enceinte, l'enceinte comportant une porte latérale formant l'une des parois de l'enceinte.

L'invention concerne également un procédé de démarrage d'un dispositif de production d'électricité conforme à l'une quelconque des caractéristiques ci-dessus ou ci-dessous, en cas de température négative, le procédé comprenant une étape de fermeture des ouvertures de l'enceinte lorsque la pile est à l'arrêt et, avant le démarrage de la pile, une étape de réchauffage préalable de l'air dans l'enceinte via le au moins un organe de réchauffage.

Selon une autre particularité possible, lorsque la température au sein de l'enceinte atteint un seuil déterminé, la pile est mise en marche et les ouvertures de l'enceinte sont sélectivement ouvertes.

L'invention peut concerner également tout dispositif ou procédé alternatif comprenant toute combinaison des caractéristiques ci-dessus ou ci-dessous.

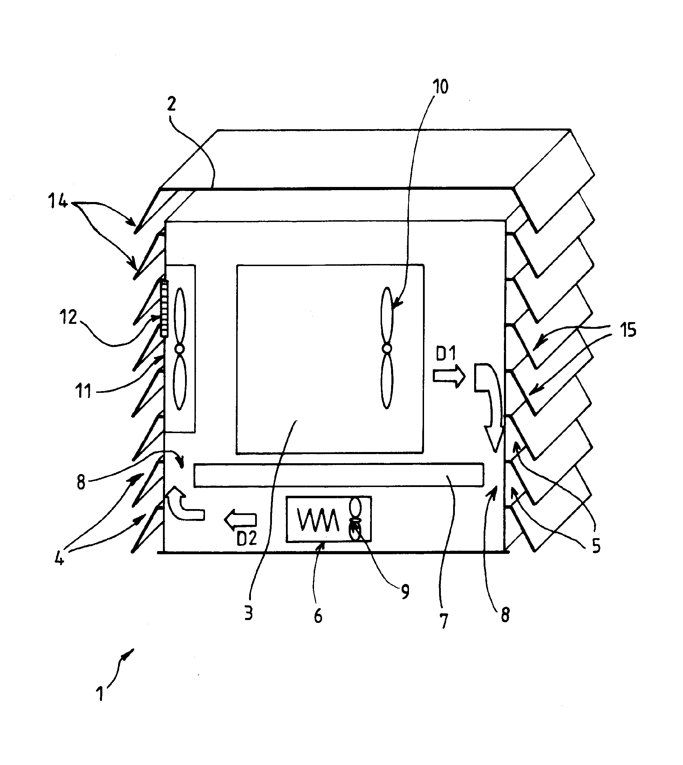

D'autres particularités et avantages apparaîtront à la lecture de la description ci-après, faite en référence à la figure unique qui représente schématiquement et de façon partielle la structure et le fonctionnement d'un exemple de réalisation possible selon l'invention.

Le dispositif de production d'électricité représenté à la figure comprend une enceinte 2 abritant en son sein une pile 3 à combustible. L'enceinte 2 est par exemple un compartiment d'une armoire de forme parallélépipédique. Un autre compartiment de l'armoire (non représentée) peut inclure par exemple une circuiterie électrique ou une application (dispositif de téléphonie) destinée à être alimentée électriquement par la pile 3 à combustible.

Classiquement, la pile 3 est par exemple une pile du type à membrane échangeuse de protons, constituée d'un empilement de cellules élémentaires. De préférence, la pile 3 comporte classiquement un système de refroidissement intégré muni d'au moins un ventilateur 10 de refroidissement. Le ventilateur 10 de refroidissement de la pile 3 déplace l'air au dessus du plancher 7 pour refroidir notamment l'empilement de cellules selon une première direction D1, par exemple parallèle au plan du plancher 7.

L'enceinte 2 définit un volume clos autour de la pile 3. Par soucis de simplification, la face avant de l'enceinte 2 n'est pas représentée sur la figure, cette face avant peut être constituée par exemple d'une porte articulée assurant l'accès à l'intérieur de l'enceinte 2.

L'enceinte 2 est munie d'ouvertures 4, 5 sélectivement obturables par des volets 14, 15, par exemple motorisés, pour réguler la circulation d'air entre l'intérieur de l'enceinte 2 et l'extérieur.

La pile 3 repose sur un plancher 7 de support dans l'enceinte 2. Le plancher 7 est par exemple une plaque parallélépipédique montée coulissante dans l'enceinte 2. Le plancher 7 est par exemple monté sur des glissières de telle sorte à pourvoir sortir ou rentrer la pile 3 comme s'il s'agissait d'un tiroir. Lorsque l'enceinte 2 est disposée sur une surface horizontale plane le plancher 7 est par exemple également horizontal.

La plancher 7 délimité des volumes situés respectivement au-dessus et au-dessous du plancher 7. Selon une particularité, au moins organe 6 de réchauffage sélectif de l'air, distinct de la pile 3, est disposé dans l'enceinte 2, en dessous du plancher 7. Cet organe 6 de réchauffage peut comprendre par exemple une résistance électrique ou tout autre appareil approprié. Le volume situé sous le plancher 7 abritant l'organe 6 de réchauffage communique avec le volume de l'enceinte 2 situé au dessus du plancher 7 via au moins un passage 8. Par exemple, les dimensions du plancher 7 sont inférieures aux dimensions transverses de l'enceinte 2 de sorte que le au moins un passage 8 est formé par un espace entre la périphérie du plancher 7 et une ou ses parois adjacentes de l'enceinte 2. En variante ou en combinaison, les passages 8 peuvent comprendre des ouvertures formées au travers du plancher 7 lui-même.

Avec un tel agencement, l'air réchauffé par l'organe 6 de réchauffage va naturellement monter dans l'enceinte 2.

De plus, en cas de carburant inflammable (hydrogène gazeux alimentant la pile 3), l'hydrogène va également migrer vers le haut de l'enceinte 2 et donc éviter le contact avec la partie chaude de l'organe 6 de réchauffage situé sous le plancher 7. A cet effet, un capteur de détection d'hydrogène peut notamment être positionné en partie haute de l'enceinte pour détecter une éventuelle fuite.

Le plancher 7 est de préférence un bon conducteur de la chaleur et notamment constitué de métal. De cette façon, le plancher 7 constitue également de dissipateur thermique (le plancher 7 est chauffé par le chauffage positionné en dessous).

De préférence, un ventilateur 9 inférieur est disposé sous le plancher 7. Ce ventilateur 9 inférieur est associé à l'organe 6 de réchauffage situé sous le plancher 7 pour générer sélectivement un courant de circulation d'air chaud du volume situé sous le plancher 7 vers le volume situé au-dessus du plancher 7.

De préférence, le ventilateur 9 inférieur est orienté pour déplacer l'air selon une seconde direction D2 ayant une composante principale opposée à la première direction D1. Par exemple, le ventilateur 9 inférieur est orienté pour déplacer l'air selon une direction parallèle au plan du plancher 7 mais en sens inverse du ventilateur 10 de refroidissement de la pile 3. De cette façon, cela favorise la formation d'un flux de circulation de gaz en boucle dans l'enceinte 2 autour du plancher 7 (comme représenté schématiquement par les flèches à la figure). Ainsi, le ventilateur 9 inférieur aspire vers le bas de l'air provenant du refoulement du au moins un ventilateur 10 de refroidissement de la pile et le renvoie vers le haut de l'enceinte 2.

Ceci créé une convection forcée qui s'ajoute à la convection naturelle pour balayer toute l'enceinte 2 avec de l'air chaud.

Comme représenté, de préférence les ouvertures 4, 5 sélectivement obturables par des volets 14, 15 mobiles sont situées sur deux parois opposées de l'enceinte 2. Dans l'exemple représenté à la figure les ouvertures 4, 5 sont formées sur la totalité des parois concernées. Cependant, dans un mode de réalisation préféré, ces ouvertures obturables 4, 5 sont situées uniquement au-dessus du plan du plancher 7. De même, dans un mode de réalisation possible et facultatif, les ouvertures 4, 5 sélectivement obturables par des volets 14, 15 mobiles peuvent être situées sur deux parois perpendiculaires de l'enceinte 2 (notamment sur deux parois adjacentes de l'enceinte 2). En effet, cette variante, même si elle n'est pas préférée car elle peut le cas échéant augmenter les pertes de charges dans l'écoulement d'air, peut être rendue nécessaire en raison d'autres contraintes d'intégration.

Les deux faces opposées de l'enceinte 2 munies des ouvertures 4, 5 obturables par exemple sont perpendiculaires à la première direction D1.

De plus, l'enceinte 2 peut comporter au moins un ventilateur 11 supérieur disposé au-dessus du plancher 7 de façon adjacente à au moins une ouverture 4, 5 sélectivement obturable par des volets. Le ou les ventilateurs 11 de refroidissement sont par exemple disposés à l'intérieur de l'enceinte 2, derrière les ouvertures 4, 5 de l'une des parois de l'enceinte 2.

Ainsi, la direction d'écoulement d'air généré par le au moins un ventilateur 11 supérieur peut être identique à la première direction D1 d'écoulement d'air généré par le au moins un ventilateur 10 de refroidissement de la pile 3. Ceci favorise encore les échanges thermiques de refroidissement le cas échéant.

En effet, le confinement de la pile 3 dans l'enceinte 2, utile pour l'isolation thermique de la pile 3 et pour la protéger des pollutions environnantes (poussières), génère des pertes de charges qui vont diminuer le débit potentiel d'air dédié au refroidissement. Ce ou ces ventilateurs 11 supérieurs disposés en série avec le ou les ventilateurs 10 de refroidissement de la pile 3 permettent de combler un éventuel déficit de refroidissement.

Ce ou ces ventilateurs 11 supérieurs peuvent être utilisés sélectivement pour suppléer au refroidissement de la pile 3.

Comme schématisé à la figure, au moins une partie des ouvertures 4, 5 sélectivement obturables peuvent être munies de filtres 12, pour empêcher ou limiter l'intrusion de poussière dans l'enceinte 2.

On conçoit donc que, tout en étant de structure simple, le dispositif permet de confiner la pile 3 lorsque cette dernière est à l'arrêt en vue de maintenir une bonne isolation pour la phase de chauffe avant démarrage.

En effet, pour assurer un démarrage du dispositif en cas de température négative, il peut être prévu de fermer les ouvertures 4, 5 de l'enceinte 2 tant que la pile 3 est à l'arrêt. Avant le démarrage de la pile 3 l'enceinte peut être réchauffé via le au moins un organe 6 de réchauffage. Cette configuration permet d'envisager un démarrage de la pile même lorsque l'enceinte est dans une atmosphère très négative (-20°C).

Lorsque la température au sein de l'enceinte 2 atteint un seuil déterminé, la pile 3 peut être mise en marche et les ouvertures 4, 5 de l'enceinte 2 sont sélectivement ouvertes et le ou les ventilateurs 11 supérieurs sont activés pour refroidir la pile 3 en cas de besoin (si le ou les ventilateurs 10 de refroidissement de la pile ne sont pas suffisants).

## Revendications

1. Dispositif de production d'électricité comprenant une enceinte (2) abritant en son sein une pile (3) à combustible, notamment du type à membrane échangeuse de protons, l'enceinte (2) définissant un volume clos autour de la pile (3) et étant munie d'ouvertures (4, 5) sélectivement obturables par des volets (14, 15) mobiles pour réguler la circulation d'air entre l'intérieur de l'enceinte (2) et l'extérieur, la pile (3) étant disposée dans l'enceinte (2) sur un plancher (7) de support, **caractérisé en ce que** le dispositif comporte au moins organe (6) de réchauffage sélectif, distinct de la pile (3), disposé dans l'enceinte (2) en dessous du plancher (7) et **en ce que** le volume situé sous le plancher (7) abritant le au moins un organe (6) de réchauffage communique avec le volume de l'enceinte (2) situé au dessus du plancher (7) via au moins un passage (8).

2. Dispositif selon la revendication 1, **caractérisé en ce qu'il** comporte un ventilateur (9) inférieur disposé sous le plancher (7), le ventilateur (9) inférieur étant associé à l'organe (6) de réchauffage situé sous le plancher (7) pour générer sélectivement un courant de circulation d'air entre le volume situé sous le plancher (7) et le volume situé au-dessus du plancher (7).

3. Dispositif selon la revendication 1 ou 2, **caractérisé en ce que** la pile (3) comporte un système de refroidissement intégré muni d'au moins un ventilateur (10) de refroidissement, et **en ce que** le au moins un ventilateur (10) de refroidissement de la pile (3) déplace l'air au dessus de du plancher (7) selon une première direction (D1).

4. Dispositif selon les revendications 2 et 3, **caractérisé en ce que** le ventilateur (9) inférieur disposé sous le plancher (7) est orienté pour déplacer l'air selon une seconde direction (D2), opposée à la première direction, de sorte à créer un flux de circulation en boucle dans l'enceinte (2) dans laquelle le ventilateur (9) inférieur aspire de l'air provenant du refoulement du au moins un ventilateur (10) de refroidissement de la pile (3).

5. Dispositif selon l'une quelconque des revendications 1 à 4, **caractérisé en ce que** l'enceinte (2) comporte des ouvertures (4, 5) sélectivement obturables par des volets (14, 15) mobiles, les ouvertures (4, 5) étant situées sur deux parois opposées de l'enceinte (2), au-dessus du plancher (7).

6. Dispositif selon la revendication 5 prise en combinaison avec la revendication 3 ou 4, **caractérisé en ce que** les deux faces opposées de l'enceinte (2) munies des ouvertures (4, 5) obturables sont perpendiculaires à la première direction (D1).

7. Dispositif selon l'une quelconque des revendications 1 à 6, **caractérisé en ce que** l'enceinte (2) comporte au moins un ventilateur (11) supérieur disposé au-dessus du plancher (7) de façon adjacente à la au moins une ouverture (4, 5) sélectivement obturable par des volets (14, 15).

8. Dispositif selon l'une quelconque des revendications 3 ou 4 combinée à la revendication 7, **caractérisé en ce que** la direction (D1) d'écoulement d'air généré par le au moins un ventilateur (10) de refroidissement de la pile (3) est identique à la direction d'écoulement d'air généré par le au moins un ventilateur (11) supérieur.

9. Dispositif selon l'une quelconque des revendications 1 à 8, **caractérisé en ce que** les ouvertures (4, 5) sélectivement obturables sont munies de filtres (12) à particules, pour empêcher ou limiter l'intrusion de poussière dans l'enceinte (2).

10. Dispositif selon l'une quelconque des revendications 1 à 9, **caractérisé en ce que** le plancher (7) est un bon conducteur de la chaleur et notamment constitué de métal.

11. Procédé de démarrage d'un dispositif de production d'électricité conforme à l'une quelconque des revendications 1 à 10 en cas de température négative, le procédé comprenant une étape de fermeture des ouvertures (4, 5) de l'enceinte (2) lorsque la pile (3) est à l'arrêt et, avant le démarrage de la pile (3), une étape de réchauffage préalable de l'air dans l'enceinte (2) via le au moins un organe (6) de réchauffage.

12. Procédé selon la revendication 11, **caractérisé en ce que**, lorsque la température au sein de l'enceinte (2) atteint un seuil déterminé, la pile (3) est mise en marche et les ouvertures (4, 5) de l'enceinte (2) sont sélectivement ouvertes.
